Europäisches Patentamt

European Patent Office

Office européen des brevets

(11) Publication number: **0 392 563**
**A2**

(12) **EUROPEAN PATENT APPLICATION**

(21) Application number: **90107251.2**

(51) Int. Cl.5: **G06F 11/00, G06F 11/10**

(22) Date of filing: **17.04.90**

(30) Priority: **13.04.89 JP 93366/89**

(43) Date of publication of application:
**17.10.90 Bulletin 90/42**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Hirahara, Jiro**
**4628-10, Endo**
**Fujisawa-Shi, Kanagawa-Ken(JP)**
Inventor: **Miyawaki, Tsukasa**
**201, Yoneyama-Heights, 6302 Tsujido**
**Fujisawa-Shi, Kanagawa-Ken(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Microcode testing method and apparatus therefor.**

(57) A microcode testing method and apparatus in which parity check data is added to a microcode and the microcode with the parity check data are stored in a memory (1), the microcode with the parity check data outputted from the memory are supplied to a parity check unit (2) for parity checking and error detecting, and if an error is detected, the error detection result from an error notice unit (3, 4) is notified to the circuit portion whose operation is influenced by the microcode for which an error is detected.

FIG. I

# MICROCODE TESTING METHOD AND APPARATUS THEREFOR

## BACKGROUND OF THE INVENTION

The present invention relates to a method and apparatus for testing a microcode which controls an operation of an arithmetic/logical unit of a central processing unit (CPU).

The operation of an arithmetic/logical unit, particularly an ALU, registers and the like, of a CPU is controlled by a microcode stored in a ROM within the CPU. If there is a bug or an error in a microcode, the operation cannot be executed correctly. It is therefore necessary to test a microcode for whether it has bug or not.

If a ROM is fabricated in a separate chip from a CPU, it is possible to read all microcodes separately for only the ROM from other circuits and to test them whether there are bugs or not. In such a case, microcodes can be tested directly without taking a long time, thereby posing no problem.

If a ROM is fabricated in a chip together with an arithmetic/logical unit, a control unit and the like, it is not possible to read microcode separately for only the ROM from other circuits and test them. In such a case, a test operation for which the output results for a certain input are previously known, is performed at the arithmetic/logical unit to check the output results. For instance, if an addition operation 1 + 2 is to be carried out, after this addition operation has been carried out, one of other addition operations whose output results are already known, such as 0 + 0, 1 + 9, 1 + 99 and the like, is carried out a plurality of times. The addition results are then checked. If they are correct, then the microcode is supposed to be normal. If there is any error, it is judged that the microcode has a bug. As described above, in the conventional art, each time one operation is carried out, test operation instructions are given to check that each of the operation results is the same as expected using software.

Computers nowadays have complicated instruction systems so that the number of microcode types and program steps (generally, one macro instruction is described by a plurality of micro codes) is also increasing, resulting in an increase of the factors to be tested. It is therefore necessary to carry out 100 or more test operations per operation, requiring in a long test time. In addition, it takes a long time and a high cost to develop software for carrying out test operations. The developed software itself is complicated so that bugs may be present, thereby posing the problem that the reliability of the test results is not always good.

## SUMMARY OF THE INVENTION

It is therefore an object of the present invention to provide a method of and apparatus for testing microcodes, and which is capable of reducing a test time and cost while retaining a high reliability.

According to the present invention, there is provided a microcode testing method comprising the steps of: adding a parity check data to a microcode and storing the microcode with the parity check data in a microcode storage means; supplying the microcode with the parity check data outputted from the microcode storage means to a parity check means for parity checking and error detecting; and if an error is detected, notifying the error detection result from an error notice means to the circuit portion whose operation is influenced by the error-detected microcode.

According to an aspect of this invention, parity check data is added to a microcode. A microcode is read from a memory means and a parity thereof is checked at a parity check unit. If a bug is found in a microcode, an error notice unit notifies an arithmetic/logical unit and the like of the presence of a bug.

The error notice may be made by giving abnormal data to the arithmetic/logical unit and causing the operation to overrun.

If a bug is detected when each microcode is subjected to a parity check, the presence of a bug is notified to the arithmetic/logical unit. It is therefore possible to detect bugs in a short time and with high precision while reducing the test cost. The above test can be carried out by a microcode testing apparatus of this invention.

According to the present invention, there is provided a microcode testing apparatus comprising; storage means for storing a plurality of microcodes and corresponding parity check data; parity check means for detecting an error of each microcode by subjecting the microcode and parity data to a parity check; and error notice means for notifying, if the parity check means detects an error, an error detection result to the circuit portion whose operation is influenced by the error-detected microcode.

## BRIEF DESCRIPTION OF THE DRAWINGS

In the accompanying drawings,

Fig. 1 is a circuit diagram showing an embodiment of a microcode testing apparatus according to the present invention;

Fig. 2 is a diagram illustrating the execution of parity check using the test apparatus according to the present invention; and

Fig. 3 is a graph illustrating the relationship between a test time and the reliability.

## DESCRIPTION OF THE PREFERRED EMBODIMENT

An embodiment of the present invention will be described with reference to the accompanying drawings. Testing a microcode has been carried out conventionally by using only software. However, in this embodiment, a microcode is tested by hardware, i.e., a testing apparatus, which is a distinctive difference.

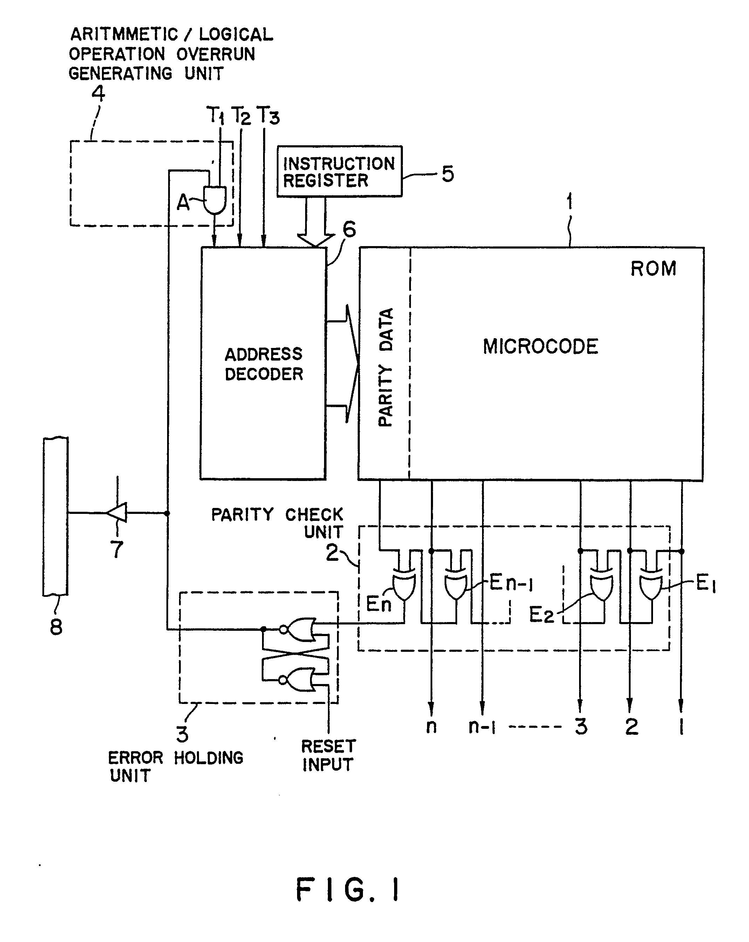

Fig. 1 shows the circuit arrangement of a microprocessor of the embodiment.

An instruction register 5 is an 8-bit or 16-bit register, for example, for temporarily storing a macro level instruction entered from a keyboard or an auxiliary storage unit (both not shown). The stored contents thereof are supplied to an address decoder 6. State information T1, T2 and T3 for transferring the state of the microprocessor are also supplied to the address decoder 6 at predetermined timings.

The address decoder 6 decodes a received instruction to designate the address of a ROM 1. The ROM 1 stores therein microcodes which control the operation of an arithmetic/logical unit (not shown). A microcode is constructed of n bits, and a parity check data of one bit is added thereto. This parity check data is set such that it takes a value "1" if the number of "1"s in the microcode is odd, and a value "0" is even. Therefore, the total number of "1"s is even.

One of the microcodes stored in the address designated by the address decoder 6 is read out.

Data of each digit of the outputted microcode is tested by using the embodiment testing apparatus constructed of a parity check unit 2, an error holding unit 3, and an arithmetic/logical operation overrun generating unit 4, respectively surrounded by broken lines.

In the parity check unit 2, the data of first and second digit of the microcode are given to an Exclusive OR gate $E_1$. The output from the Exclusive OR gate $E_1$ and the data of the third digit of the microcode are given to an Exclusive OR gate $E_2$. In a similar manner, Exclusive OR gates $E_3$ to $E_{n-2}$ carry out exclusive-OR operations. The output from the Exclusive OR gate $E_{n-2}$ and the n-th digit data of the microcode are given to an Exclusive OR gate $E_{n-1}$. Lastly, the output from the Exclusive

OR gate $E_{n-1}$ and the parity data are given to an Exclusive OR gate $E_n$ The output from the Exclusive OR gate $E_n$ always takes a value "0" so long as the microcode is correct, because the above-mentioned parity check data is added thereto. However, in the case of a defective microcode having a one bit bug within n digits data caused by a trouble during the IC manufacturing steps, a value "1" is outputted from the Exclusive OR gate $E_n$ because the total number of "1"s becomes odd.

A signal outputted from the Exclusive OR gate $E_n$ is temporarily stored in the error holding unit 3 constructed of an RS type flip-flop. This error holding unit 3 continues to output an inverted data outputted from the Exclusive OR gate $E_n$ until a reset signal is inputted. Namely, a data "1" is continuously outputted for a correct microcode, and data "0" when a microcode having a bug is detected.

An output of the error holding unit 3 is sent to a data bus 8 via a tri-state buffer 7 to thereby directly give a control unit an error occurrence information.

An output of the error holding unit 3 is also supplied to the arithmetic/logical operation overrun generating unit 4 which includes a logical multiplication (AND) gate A and constitutes a part of the error notice unit. The output of the error holding unit 3 and the state information T1 are supplied to the AND gate A. If the data supplied from the error holding unit 3 is "1", which means that the microcode is correct, the state information T1 is supplied to the address decoder 6 at a predetermined timing. On the other hand, if the data supplied from the error holding unit 3 is "0", which means that the microcode has a bug, the state information T1 is not supplied to the address decoder 6. As a result, instructions become asynchronous and the arithmetic/logical unit overrun. The control unit can therefore detect that the microcode has a bug.

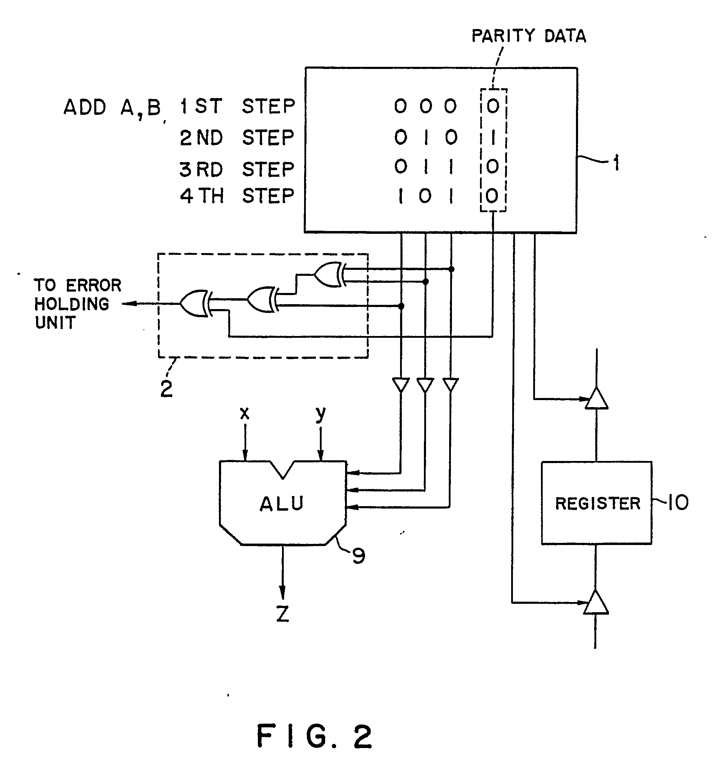

Fig. 2 shows an example of a parity check used in the present invention. In this case, an adding instruction (macro instruction) of ADD A, B is assumed to be described by microcodes of four steps.

Each micro code is read out together with the corresponding parity data from the ROM, and they are subjected to the parity check at the parity check unit. After the parity check, the result of the parity check is sent to the error holding unit 3 as shown in Fig. 1.

On the other hand, the micro codes are supplied to an arithmetic and logic unit 9 which performs a predetermined operation (in this embodiment, adding) for two input signals x and y according to the given microcode as a control code.

Some portion of the microcodes also controls the register 10.

The test using a parity check as described above can be carried out in a very short time when compared with a conventional test which carries out 100 or more test operations for each operation. In addition, the test is carried out by using an apparatus equipped with the parity check unit 2, error holding unit 3, and arithmetic/logical operation overrun generating unit 4, so that the test results have a higher reliability than that obtained by testing using only software which is complicated and likely to have bugs. Furthermore, the term for developing test software can be shortened, and the total cost for implementing test can be reduced.

In the above embodiment, only one bit parity check data is used. Accordingly, if two bugs are present in a microcode, an error cannot be detected. In order to improve the reliability, it is possible to add two or more parity bits. However, it seldom occurs that a microcode has two bugs. Therefore, in most cases, it is sufficient for the parity check data to have one bit.

Furthermore, in addition to the parity check described above, the conventional test operations may be carried out to further improve the reliability. In such a case, it is possible to reduce the number of test operations to the order of 10 from the conventional 100 or more test operations, thereby also shortening a test time.

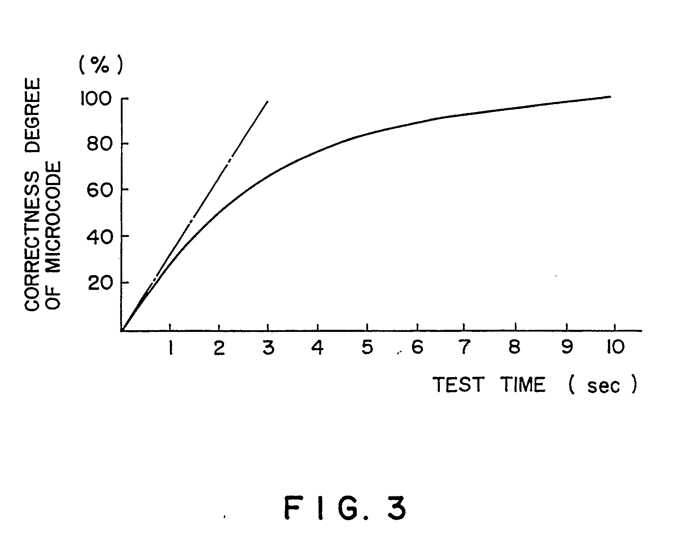

Fig. 3 shows the relationship between the test time and the degree of reliability of a microcode, the reliability being indicative of the probability that a microcode detected as having no bug by the test actually has no bug. The larger the value of the correctness degree is, the higher the reliability of the test is. A solid line represents the results obtained by a conventional test, and a one-dot-chain line represents the results obtained by a parity check and test operations according to the present invention. The increase in the test time of the one-dot-chain line means that the number of test operations is increased.

According to the conventional test, for example, the degree of reliability is 65% for a test time of 3 seconds, and the correctness degree equal to or higher than 99% requires a test time of 9 seconds or more. The conventional test using only software needs a long test time and increased cost for obtaining a high degree of reliability.

In contrast, according to the embodiment test, for example, a test time of 3 seconds can obtain a correctness degree of 99%. Subjecting a microcode to a parity check as in this embodiment considerably improves the test reliability with a short test time.

The above embodiment has been described by way of example only and is not intended to limit the scope of the present invention. For example, in the above embodiment the values of parities are set such that the total number of "1"s always becomes even. The values of parities may be set such that the total number of "1"s always becomes odd. A notice of an error to the arithmetic/logical unit may be carried out in a different manner from that of the embodiment. For example, the arithmetic/logical operation running-away may be effected by giving an abnormal input to the address decoder or by making the instruction to be given to the arithmetic/logical unit all "0"s. Furthermore, the presence of a bug may be notified to the arithmetic/logical unit to read the presence of a bug as data so that an operation different from the normal one may be executed by the software.

Reference signs in the claims are intended for better understanding and shall not limit the scope.

## Claims

1. A microcode testing method comprising the steps of:
adding a parity check data to a microcode and storing the microcode with the parity check data in a microcode storage means (1);
supplying said microcode with the parity check data outputted from the microcode storage means (1) to a parity check means (2) for parity checking and error detecting; and
if an error is detected, notifying the error detection result from an error notice means (3, 4) to the circuit portion whose operation is influenced by the error-detected microcode.

2. A microcode testing method according to claim 1, wherein said error detection notice executed by said error notice means is effected by giving an abnormal data to an arithmetic/logical unit and causing the arithmetic/logical operation to overrun.

3. A microcode testing apparatus comprising;
storage means (1) for storing a plurality of microcodes and corresponding parity check data;
parity check means (2) for detecting an error of each microcode by subjecting the microcode and parity data to a parity check; and
error notice means (3, 4) for notifying, if said parity check means detects an error, an error detection result to the circuit portion whose operation is influenced by the error-detected microcode.

4. A microcode testing apparatus according to claim 3, wherein said error notice means comprises error holding means (3) for holding said error detection result, and buffer means (7) for coupling an output signal from said error holding means to a data bus.

5. A microcode testing apparatus according to claim 3, wherein when said parity check means detects an error, said error notice means comprises gate means (4) for giving an abnormal data to an arithmetic/logical unit and causing the arithmetic/logical operation to overrun.

FIG. I

PARITY DATA

| ADD A,B | 1ST STEP | 0 0 0 | 0 |
| | 2ND STEP | 0 1 0 | 1 |
| | 3RD STEP | 0 1 1 | 0 |
| | 4TH STEP | 1 0 1 | 0 |

1

TO ERROR HOLDING UNIT

2

x    y

ALU

9

Z

REGISTER — 10

F I G. 2

FIG. 3